# EUROPÄISCHE PATENTANMELDUNG

(11) **EP 2 572 871 A2**
(43) Veröffentlichungstag der Anmeldung: **27.03.2013**
(21) Anmeldenummer: 12181564.1
(22) Anmeldetag: 23.08.2012
(51) Int. Cl.: B29C 70/88, G01N 23/04

(54) **Textilverstärkter Faserverbund sowie Verfahren zur zerstörungsfreien Prüfung von Faserorientierung und Lagenaufbau in Bauteilen aus textilverstärkten Verbundwerkstoffen**

(30) Priorität: 21.09.2011 DE 102011083160
(71) Anmelder: Siemens Aktiengesellschaft, 80333 München (DE); Leichtbau-Zentrum Sachsen GmbH, 01307 Dresden (DE)
(72) Erfinder: Andrich, Manuela, 01279 Dresden (DE); Füßel, René, 01127 Dresden (DE); Völker, Lutz, 02826 Görlitz (DE); Hufenbach, Werner, 01324 Dresden (DE)
(74) Vertreter: Maier, Daniel Oliver

(57) **Zusammenfassung**

Die Erfindung umfasst einen textilverstärkten Verbundwerkstoff 1 umfassen eine Verstärkungsfaser 2 und ein Matrixmaterial 3, wobei die Verstärkungsfaser 2 aus einem Faserstrang mit mehreren einzelnen Fasern besteht. Zumindest ein Faserstrang umfasst dabei zumindest eine Prüffaser, wobei der Dichteunterschied zwischen der Einzelfaser des Faserstrangs und dem Matrixmaterial 3 kleiner ist als der Dichteunterschied zwischen der Prüffaser 4 und dem Matrixmaterial 3. Hierdurch ergibt sich eine bessere Detektierbarkeit des Faserstranges mit der Prüffaser 4 mittels einer computertomographischen Untersuchung. Die Erfindung umfasst weiter ein Verfahren zur zerstörungsfreien Prüfung von Faserorientierung und Lagenaufbau eines Bauteils aus einem textilverstärkten Verbundwerkstoffes, wobei der textilverstärkte Verbundwerkstoff eine Prüffaser 4 entsprechend des Patentanspruchs 1 aufweist.

## Beschreibung

Die Erfindung betrifft einen textilverstärkten Verbundwerkstoff nach dem Oberbegriff des unabhängigen Patentanspruchs 1 sowie ein Verfahren zur zerstörungsfreien Prüfung von Faserorientierung und Lagenaufbau eines Bauteils aus textilverstärktem Verbundwerkstoff nach dem Oberbegriff des unabhängigen Verfahrensanspruchs 9.

Die Herstellung und der Einsatz von Bauteilen aus textilverstärkten Verbundwerkstoffen sind derzeit noch nicht im großen Maßstab realisiert, da eine effiziente und sichere Serienfertigung aussteht. Ein Hauptgrund hierfür ist das Fehlen einer zerstörungsfreien Prüfmethode, die insbesondere bei komplexen, gekrümmten Strukturen, Fertigungsfehler wie Poren und Delaminationen, aber auch Abweichungen bei der textilen Ausrichtung und beim Lagenaufbau detektieren kann.

Insbesondere für sehr komplexe gekrümmte Bauteile, wie beispielsweise Turbinenschaufel aus kohlenfaserverstärkten Kunststoffverbund gibt es derzeit keine bekannten und serientauglichen Prüfmethoden.

Verdichterschaufeln bei Triebwerken werden bislang mittels eines Ultraschallverfahrens geprüft. Dabei erfolgt die Abtastung jeweils nur punktuell und es können nur Poren und Schäden detektiert werden. Eine Fertigungskontrolle über die Fadenarchitektur ist mit diesen Verfahren nicht möglich. Zudem beeinträchtigen dicke Unterschiede, wie sie charakteristisch für die Schaufelgeometrie sind, die Aussagefähigkeit der Ultraschallprüfung. Das Ultraschallverfahren eignet sich daher im Wesentlichen nur zur punktuellen Prüfung ebener, plattenförmiger Strukturen.

Eine weitere Möglichkeit textilverstärkte Verbundwerkstoffe zu prüfen, ist die computertomographische Analyse, die sich die röntgenographischen Dichteunterschiede zwischen den Fasermaterial und dem matrixmaterial zu Nutze macht. Bei Turbinenschaufel aus kohlenfaserverstärkten Epoxydharz liegt die röntgenographische Dichte der Kohlenstofffaser und des Epoxydharzes allerdings sehr nahe beieinander, was die Unterscheidung in die beiden Bestandteile, das heißt die Unterscheidung zwischen Fasermatrixmaterial und Matrixmaterial bei der Auswertung mittels der computertomographischen Aufnahme deutlich erschwert. Um eine solche Auswertung hinsichtlich der Faserorientierung und der Anzahl der Lagen durchführen zu können, muss deshalb die Auflösung des Prüfbereiches sehr hoch gewählt werden, wodurch sich die Untersuchung nur punktuell durchführen lässt. Eine Untersuchung eines textilverstärkten Verbundwerkstoffes bzw. eines aus diesem hergestellten Bauteils, kann mit dieser Methode bislang nicht durchgeführt werden.

Ausgehend vom derzeitigen Stand der Technik ist es somit Aufgabe der vorliegenden Erfindung, einen textilverstärkten Verbundwerkstoff auszubilden, welcher einfacher mittels einer zerstörungsfreien Prüfmethode geprüft werden kann. Des Weiteren ist es Aufgabe der vorliegenden Erfindung, ein Verfahren zur zerstörungsfreien Prüfung von Faserorientierung und Lagenaufbau eines Bauteils aus einem textilverstärkten Faserverbund bereitzustellen.

Die Aufgabe wird hinsichtlich des textilverstärkten Verbundwerkstoffes durch die Merkmale des unabhängigen Patentanspruchs 1 gelöst. Hinsichtlich des Verfahrens wird die Erfindung durch die Verfahrensschritte nach dem unabhängigen Patentanspruch 9 gelöst.

Weitere Ausgestaltungen der Erfindung die einzeln oder in Kombination miteinander einsetzbar sind, sind Gegenstand der Unteransprüche.

Der erfindungsgemäße textilverstärkte Verbundwerkstoff, umfassend eine Verstärkungsfaser und ein Matrixmaterial, wobei die Verstärkungsfaser aus einem Faserstrang mit mehreren einzelnen Fasern besteht, zeichnet sich dadurch aus, dass zumindest ein Faserstrang, zumindest eine Prüffaser umfasst, wobei der Dichteunterschied zwischen den Einzelfasern des Faserstrangs und dem Matrixmaterial kleiner ist als der Dichteunterschied zwischen der Prüffaser und dem Matrixmaterial. Aufgrund des größeren röntgenographischen Dichteunterschiedes zwischen dem Matrixmaterial und dem Faserstrang mit der Prüffaser, kann der Faserstrang wesentlich einfacher mittels einer Computertomographie detektiert werden. Hierbei ist eine wesentlich geringere Auflösung der computertomographischen Aufnahme notwendig als bei einem textilverstärkten Faserverbundwerkstoff ohne Prüffaser. Durch die geringere notwendigere Auflösung der computertomographischen Untersuchung können größere Bauteile wie zum Beispiel CFK-Turbinenschaufeln unabhängig von ihrer komplexen Geometrie als gesamtes Bauteil oder zumindest in wenigen Bauteilabschnitten einer computertomographischen Untersuchung zugeführt werden. Dieser Prozess kann serienmäßig durchgeführt werden. Die Auswertung der computertomographischen Aufnahmen kann mittels einer Auswertesoftware erfolgen, die es erlaubt, die Selektierung der röntgenographischen Dichte des Faserstrangs und deren räumliche Anordnung darzustellen. Die Auswertung der räumlichen Orientierung des Faserstrangs bzw. der Faserstränge gibt wiederum Rückschlüsse auf die Fertigungsqualität des Bauteils.

Eine Ausgestaltung der Erfindung sieht vor, dass sich die Dichte von Prüffaser und des Matrixmaterial um wenigstens 50% voneinander unterscheidet. Ein solcher Unterscheid in den Dichten von Prüffaser und Matrixmaterial gewährleistet eine hinreichend gute Auflösung einer computertomographischen Aufnahme und damit eine sichere Detektierung der Faserstränge innerhalb des Bauteils. Die Prüffaser kann dabei eine entsprechend höhere aber auch niedrigere Dichte als das Matrixmaterial aufweisen.

Eine weitere Ausgestaltung der Erfindung sieht vor, dass die Verstärkungsfasern zu einem Gewebe verflochten sind. Das Gewebe ermöglicht eine einfachere Verarbeitung gegenüber einzelnen Fasern insbesondere bei großflächigen Bauteilen.

Eine besondere Ausgestaltung der Erfindung sieht vor, dass das Gewebe Kettfaserstränge und Schussfaserstränge umfasst. Die Kettfaserstränge liegen dabei im Wesentlichen rechtwinklig zu den Schussfasersträngen und spannen somit ein orthogonales Gewebe auf.

Eine entsprechende Ausgestaltung der Erfindung sieht vor, dass die Prüffasern in den Kettfasersträngen und oder den Schussfasersträngen eingearbeitet sind. Die Prüffaser sollte sich dabei möglichst immer in der Hauptverstärkungsrichtung bzw. in den Hauptverstärkungsfäden befinden, so dass eine sichere Detektierung der Faserstränge in Hauptverstärkungsrichtung gewährleistet ist. Die richtige Lage der Hauptverstärkungsfäden ist bei der Prüfung von textilfaserverstärkten Verbundwerkstoffen bzw. Bauteilen die eine solche textilfaserverstärkten Verbundwerkstoff umfassen besonders wichtig, da sich Fehler hier insbesondere durch ein Versagen der Bauteile unter Belastung besonders schwerwiegend auswirken.

Eine Ausgestaltung der Erfindung sieht vor, dass die Faserstränge aus Kohlenfaser bestehen und/oder die Prüffaser eine Glasfaser oder Metallfaser ist. Kohlenfaser hat den besonderen Vorteil, dass sie sehr hoch belastbar sind. Bei Verwendung eines Epoxydharzes als Matrixmaterial ist der Dichteunterschied zwischen dem Matrixmaterial und der Kohlefaser jedoch sehr gering, so dass sich die Prüffaser mit Hilfe der Computertomographie nur sehr schwer und bei hoher Auflösung detektieren lassen. Bei der Verwendung einer Glasfaser bzw. einer Metallfaser als Prüffaser ergibt sich aufgrund der deutlich größeren Dichte und des damit auftretenden größeren Dichteunterschiedes zwischen der Prüffaser und dem Matrixmaterial eine deutlich besseren Detektierbarkeit des Faserstranges mit der Prüffaser, bei einer gleichzeitig geringeren Auflösung der computertomographischen Aufnahme. Hierdurch wird es ermöglicht, dass gesamte Bauteil oder zumindest größere Bereiche des Bauteils in einem Schritt einer computertomographischen Untersuchung zuzuführen.

Besonders bevorzugt weist die Prüffaser einen Durchmesser von weniger als 50µm vorzugsweise weniger als 20µm auf. Grundsätzlich sollte die Prüffaser eine Querschnittsgröße haben, die gerade notwendig ist, um in der computertomographischen Aufnahme noch detektierbar zu sein. Ein solcher Prüffaden stört die mechanischen Eigenschaften des Textils nicht und ist mit bloßem Auge nicht zu erkennen.

Das erfindungsgemäße Bauteil, umfassend eine textilverstärkten Verbundwerkstoff, zeichnet sich dadurch aus, dass der textilverstärkte Verbundwerkstoff wenigstens eine Prüffaser nach einem der Ansprüche 1 bis 7 umfasst. Ein solches Bauteil kann sehr einfach mittels einer computertomographischen Untersuchung zerstörungsfrei untersucht werden, wobei durch die Selektierung der mit einer Prüffaser durchsetzten Verstärkungsfaser die Faserorientierung sowie die Anzahl der Lagen bestimmbar ist und Fehler bei der Verarbeitung des textilverstärkten Verbundwerkstoffes sehr einfach sichtbar gemacht werden können. Die Bauteile können dabei auch komplexe Formen aufweisen, wie dies zum Beispiel bei Verdichterschaufeln von Triebwerken oder bei Turbinenschaufeln in Turbomaschinen der Fall ist. Aufgrund des großen Dichteunterschiedes zwischen der Prüffaser, welcher im Faserstrang angeordnet ist und das den Faserstrang umgebene Matrixmaterial, kann die computertomographische Untersuchung bei geringer Auflösung erfolgen, wodurch auch große Bauteile in einem Untersuchungsschritt als Ganzes prüfbar sind. Hierdurch wird erstmalig eine serien- bzw. automatisierte Prüfung von Bauteilen mit textilverstärkten Verbundwerkstoffen ermöglicht.

Das erfindungsgemäße Verfahren zur zerstörungsfreien Prüfung von Faserorientierung und Lagenaufbau eines Bauteils aus einem textilverstärkten Verbundwerkstoffes, wobei der textilverstärkte Verbundwerkstoff eine Prüffaser nach einem der Ansprüche 1 bis 7 aufweist, zeichnet sich durch die folgenden Verfahrensschritte aus:
- computertomographische Aufnahme zumindest eines Teilbereichs des Bauteils;
- Auswertung und Selektierung der röntgenographischen Dichte der Prüffaser;
- Räumliche Darstellung der Lage der Prüffaser;
- Bestimmung von Faserorientierung und Lagenaufbau durch Auswertung der räumlichen Darstellung der Lage der Prüffaser.

Das erfindungsgemäße Verfahren bietet zum einen die Möglichkeit einer zerstörungsfreien Prüfung von textilverstärkten Faserverbundwerkstoffen und zudem erstmalig die Möglichkeit der räumlichen Darstellung der Fasern, wodurch die Faserorientierung und der Lagenaufbau erstmalig bestimmt werden kann. Das erfindungsgemäße Verfahren ermöglicht somit erstmalig die sichere Prüfung von komplexen Bauteilen, welche einen textilverstärkten Verbundwerkstoff umfassen. Das Verfahren kann dabei auf einfache Weise automatisiert werden, wobei eine Auswertesoftware die Auswertung der computertomographischen Aufnahmen ermöglicht. Die Darstellung der Auswertergebnisse kann insbesondere optisch erfolgen.

Weitere Vorteile und Ausgestaltungen der Erfindung werden nachfolgend anhand der Figuren beschrieben. Es zeigt:
- Figur 1: ein textilverstärkter Verbundwerkstoff nach dem Stand der Technik;
- Figur 2: einen erfindungsgemäßen textilverstärkten Verbundwerkstoff mit einer Prüffaser.

Die Figuren zeigen jeweils nur schematische Ausgestaltungen der Erfindung. Gleiche bzw. funktionsgleiche Bauteile werden figurübergreifend mit denselben Bezugszeichen versehen.

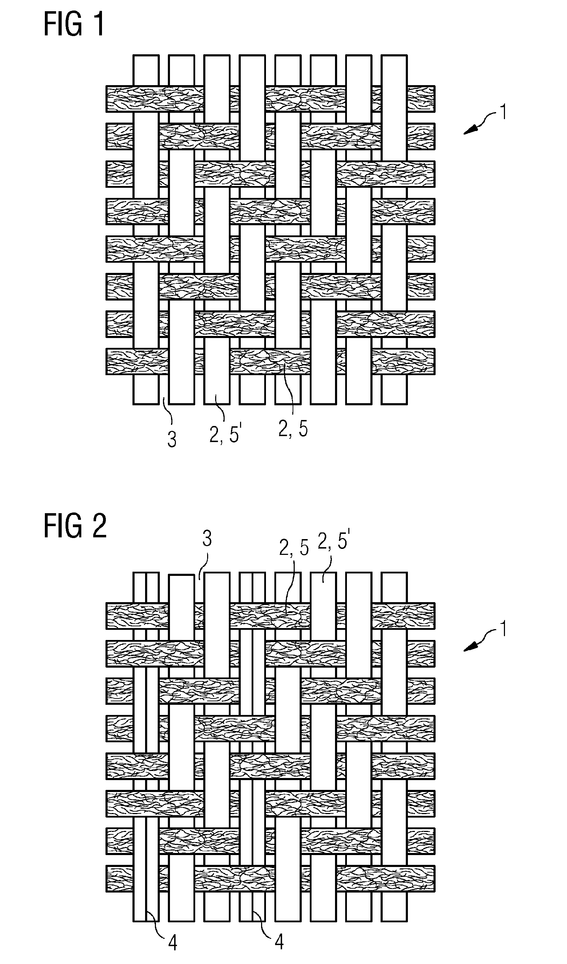

Figur 1 zeigt einen textilverstärkten Verbundwerkstoff welcher als Gewebe ausgebildet ist. Der textilverstärkte Verbundwerkstoff umfasst Verstärkungsfasern 2 und ein Matrixmaterial 3. Das Matrixmaterial 3 legt dabei die Lage der Verstärkungsfasern 2 fest. Die Belastung wird von den Verstärkungsfasern 2 aufgenommen. Der textilverstärkte Verbundwerkstoff in Form eines Gewebes weist Kettfaserstränge 5 und Schussfaserstränge 5' auf, welche miteinander verwoben sind und welche im Wesentlichen einen Winkel von 90° zueinander bilden. Der textilverstärkte Verbundwerkstoff bietet den Vorteil, dass er bei richtiger Ausrichtung der Hauptverstärkungsfäden in Hauptverstärkungsrichtung, bei sehr geringem Gewicht sehr hohe Zugbeanspruchungen aufnehmen kann. Aus diesem Grund wird der textilverstärkte Verbundwerkstoff vorzugsweise zum Aufbau von Leichtbauteilen verwendet. Solche Leichtbauteile können beispielsweise Verdichterschaufeln in Triebwerken oder Turbinenschaufeln in Turbomaschinen sein. Nach der Verarbeitung des textilverstärkten Verbundwerkstoffes kann die Lage der Hauptverstärkungsfäden allerdings nicht mehr ohne eine Zerstörung des Bauteils geprüft werden. In sicherheitsrelevanten Bauteilen ist der Einsatz von textilverstärkten Verbundwerkstoffen daher bislang ausgeblieben.

Figur 2 zeigt einen textilverstärkten Verbundwerkstoff 1 der identisch zum textilverstärkten Verbundwerkstoff nach Figur 1 aufgebaut ist. Zusätzlich weisen jedoch einzelne Verstärkungsfasern 2 zumindest eine Prüffaser 4 auf, die in die Verstärkungsfaser 2 eingearbeitet ist. Die Verstärkungsfaser umfasst üblicherweise eine Vielzahl von einzelnen Fasern die zu einem Faserstrang zusammengefasst sind und die Verstärkungsfaser 2 bilden. Die Prüffaser kann eine einzelne Faser oder eine Anzahl von Prüffasern umfassen. Die Prüffaser weist einen deutlichen Dichteunterschied zum Matrixmaterial 3 auf. Der Dichteunterschied zwischen der Prüffaser 4 und dem Matrixmaterial 3 ist dabei größer als der Dichteunterschied zwischen dem aus einzelnen Fasern gebildeten Faserstrangs und dem Matrixmaterial 3. Durch den größeren Dichteunterschied kann bei einer computertomographischen Aufnahme der Faserstrang mit der Prüffaser 4 deutlich besser detektiert werden, als ein Faserstrang ohne eine solche Prüffaser 4. Durch die bessere Detektierbarkeit kann die Auflösung der computertomographischen Aufnahme reduziert werden, wodurch größere Bauteile mittels einer einzigen computertomographischen Untersuchung geprüft werden können. Hierdurch ist es auch erstmals möglich, die Faserorientierung und den Lagenaufbau der Verstärkungsfasern 2 innerhalb des Bauteiles zu überprüden und so Fehler bei der Fertigung frühzeitig zu erkennen.

Als Faserstränge eignet sich insbesondere Kohlefaser, da diese eine sehr hohe Zugfestigkeit bei gleichzeitig sehr geringer Dichte aufweisen. Die Prüffaser 4 kann eine Glasfaser oder eine Metallfaser sein. Die Glasfaser bzw. Metallfaser hat eine deutlich höhere Dichte als der Kohlefaserstrang, so dass eine gute Detektierung der Prüffaser 4 bei der computertomographischen Aufnahme möglicht ist. Die Prüffaser 4 sollte einen möglichst geringen Durchmesser aufweisen, so dass die mechanischen Eigenschaften des Textiles und des textilverstärkten Verbundwerkstoffes nicht beeinträchtigt werden und der Faden optisch nicht sichtbar ist. Die einzelne Prüffaser 4 sollte möglichst einen Durchmesser von weniger als 50µm vorzugsweise weniger als 20 µm aufweisen.

Das Verfahren zur zerstörungsfreien Prüfung von Faserorientierung und Lagenaufbau eines Bauteils aus einem textilverstärkten Verbundwerkstoff, welcher eine Prüffaser 4 aufweist, erfolgt wie folgt: Zunächst wird von einem Teilbereich oder vom gesamten Bauteil eine computertomographische Aufnahme gemacht. Anschließend erfolgen eine Auswertung der computertomographischen Aufnahme und eine Selektierung der röntgenographischen Dichte der Prüffaser 4. Diese Auswertung kann automatisch mittels einer Auswertesoftware erfolgen. Nachfolgend erfolgen eine räumliche Darstellung der Lage der Prüffaser 4 und eine Bestimmung der Faserorientierung und des Lagenaufbaus durch die Auswertung der räumlichen Darstellung der Lage der Prüffaser 4. Durch die Bestimmung der Faserorientierung und des Lagenaufbaus können Fehler bei der Herstellung des Bauteils sicher erkannt werden. Die Bestimmung von Faserorientierung und Lagenaufbau kann wiederum automatisch durch eine entsprechende Auswertesoftware erfolgen.

Das erfindungsgemäße Verfahren ermöglicht somit erstmals eine weitgehend automatisierte zerstörungsfreie Prüfung von aus textilverstärkten Verbundwerkstoff hergestellten Bauteilen. Die Bauteile können dabei auch komplexe Formen aufweisen. Die Prüfung des Bauteils kann dabei je nach Größe des Bauteils in einem Arbeitsschritt erfolgen. Größere Bauteile werden in Teilbereiche aufgeteilt und untersucht.

Durch den neuartigen und erfindungsgemäßen textilverstärkten Verbundwerkstoff und das erfindungsgemäße Verfahren wird erstmals eine zerstörungsfreie Prüfung von Faserorientierung und Lagenaufbau für Bauteil aus textilverstärkten Verbundwerkstoff ermöglicht. Durch eine Automatisierung des Verfahrens zur zerstörungsfreien Prüfung ist auch eine Serienfertigung von Bauteilen aus textilverstärkten Verbundwerkstoffen möglich.

## Patentansprüche

1. Textilverstärkter Verbundwerkstoff (1), umfassend eine Verstärkungsfaser (2) und ein Matrixmaterial (3), wobei die Verstärkungsfaser (2) aus einem Faserstrang mit mehreren Einzelfasern besteht,
**dadurch gekennzeichnet, dass**
zumindest ein Faserstrang, zumindest eine Prüffaser (4) umfasst, wobei der Dichteunterschied zwischen den Einzelfasern des Faserstrangs und dem Matrixmaterial (3) kleiner ist, als der Dichteunterschied zwischen der Prüffaser (4) und dem Matrixmaterial (3).

2. Textilverstärkter Verbundwerkstoff (1) nach Anspruch 1,
**dadurch gekennzeichnet, dass**
sich die Dichten von Prüffaser (4) und Matrixmaterial (3) um wenigstens 50% voneinander unterscheiden.

3. Textilverstärkter Verbundwerkstoff (1) nach Anspruch 1 oder 2,
**dadurch gekennzeichnet, dass**
die Verstärkungsfasern (2) zu einem Gewebe verflochten sind.

4. Textilverstärkter Verbundwerkstoff (1) nach Anspruch 3,
**dadurch gekennzeichnet, dass**
das Gewebe Kettfasersträngen (5) und Schussfasersträngen (5') umfasst.

5. Textilverstärkter Verbundwerkstoff (1) nach Anspruch 4,
**dadurch gekennzeichnet, dass**
die Prüffaser (4) in den Kettfasersträngen (5) und/oder den Schussfasersträngen (5') eingearbeitet ist.

6. Textilverstärkter Verbundwerkstoff (1) nach einem der vorherigen Ansprüche,
**dadurch gekennzeichnet, dass**
die Faserstränge aus Kohlefaser bestehen und/oder die Prüffaser (4) eine Glasfaser oder Metallfaser ist.

7. Textilverstärkter Verbundwerkstoff (1) nach einem der vorherigen Ansprüche,
**dadurch gekennzeichnet, dass**
die Prüffaser (4) einen Durchmesser von weniger als 50 µm vorzugsweise weniger als 20 µm aufweist.

8. Bauteil, umfassend einen textilverstärkten Verbundwerkstoff (1),
**dadurch gekennzeichnet, dass**
der textilverstärkte Verbundwerkstoff (1) wenigstens eine Prüffaser (4) nach einem der Ansprüche 1 bis 7 umfasst.

9. Verfahren zum zur zerstörungsfreien Prüfung von Faserorientierung und Lagenaufbau eines Bauteils aus einem textilverstärktem Verbundwerkstoff (1), wobei der textilverstärkte Verbundwerkstoff (1) eine Prüffaser (4) nach einem der Ansprüche 1 bis 7 aufweist,
**gekennzeichnet, durch** die folgenden Verfahrensschritte:
- computertomografischen Aufnahme zumindest eines Teilbereichs des Bauteils;
- Auswertung und Selektierung der röntgenographischen Dichte der Prüffaser (4);
- räumliche Darstellung der Lage der Prüffaser (4);
- Bestimmung von Faserorientierung und Lagenaufbau **durch** Auswertung der räumlichen Darstellung der Lage der Prüffaser (4).
